# EUROPÄISCHE PATENTANMELDUNG

(11) **EP 2 036 666 A1**
(43) Veröffentlichungstag der Anmeldung: **18.03.2009**
(21) Anmeldenummer: 08014324.1
(22) Anmeldetag: 12.08.2008
(51) Int. Cl.: B23Q 15/12, B23B 31/30, B23Q 17/00, B23Q 3/16

(54) **Verfahren und Vorrichtung zum Fliehkraftausgleich bei einer Werkzeugmaschine**

(30) Priorität: 17.09.2007 DE 102007044297
(71) Anmelder: Röhm GmbH, 89567 Sontheim (DE)
(72) Erfinder: Röhm, Georg, 89567 Sontheim (DE)
(74) Vertreter: Hentrich, Swen

(57) **Zusammenfassung**

Eine Werkzeugmaschine 1 weist ein Spannfutter 2 auf, dessen Spannbacken 3 mittels eines Spannzylinders 4 verstellbar sind, der einen Zylinderkolben 5 aufweist, der in einer Zylinderkammer 6 angeordnet ist. Zwei Druckmittelleitungen 7a, 7b sind beidseits des Zylinderkolbens 5 zur Druckmittelzufuhr in den Zylinderkolben 6 angeordnet. Die Werkzeugmaschine 1 weist eine Steuerung zum Aufbau einer Druckdifferenz zwischen einem Arbeitsdruck und einem Gegendruck in Abhängigkeit der momentan gegebenen Drehzahl des Spannfutters 2 auf. Das Verfahren für den Betrieb der Werkzeugmaschine 1 umfasst einen Verfahrensschritt des Aufbauens eines Arbeitsdruckes auf der in Spannrichtung wirkenden Seite des Zylinderkolbens 5, einen Verfahrensschritt des Aufbauens eines Gegendruckes auf der gegenüberliegenden Seite des Zylinderkolbens 5 und einen Verfahrensschritt des Veränderns der Druckdifferenz zwischen Gegendruckes und Arbeitsdruck in Abhängigkeit der momentan gegebenen Drehzahl des Spannfutters 2.

## Beschreibung

Die vorliegende Erfindung betrifft sowohl ein Verfahren zum Ausgleich der Fliehkraft bei einem Betrieb einer Werkzeugmaschine als auch ein Bestimmungsverfahren einer Korrelationstabelle für das Verfahren zum Ausgleich der Fliehkraft als auch eine Werkzeugmaschine mit einer Ausgleichsvorrichtung gegen die Fliehkraft.

Insbesondere betrifft die vorliegende Erfindung eine Werkzeugmaschine mit einem Spannfutter, dessen Spannbacken mittels eines Spannzylinders verstellbar sind. Die Werkzeugmaschine weist einen Zylinderkolben auf, der in einer Zylinderkammer angeordnet ist. Zwei Druckmittelleitungen sind beidseits des Zylinderkolbens zur Druckmittelzufuhr in den Zylinderkolben angeordnet.

Bei der Bearbeitung von Werkstücken mit herkömmlichen Werkzeugmaschinen tritt das Problem auf, dass der Einfluss der Fliehkraft mit steigender Drehzahl die momentan wirkende Spannkraft auf die Werkstücke verringert, weil dem Arbeitsdruck auf die Spannbacken die Fliehkraft des Spannfutters entgegenwirkt, die mit steigender Drehzahl ansteigt. Eine höhere Drehzahl ist für eine schnellere Bearbeitung der Werkstücke erwünscht, so dass das oben genannte Problem mit den stetig steigenden Anforderungen an Geschwindigkeit und Wirtschaftlichkeit der Bearbeitung der Werkstücke immer mehr an Bedeutung gewinnt.

Bei einem herkömmlichen Verfahren zur Sicherstellung einer ausreichenden Spannkraft bei höheren Drehzahlen wird bei einer herkömmlichen Werkzeugmaschine die Anfangsspannkraft so stark erhöht, dass auch bei höheren Drehzahlen die momentan wirkende Spannkraft für die Bearbeitung der Werkstücke ausreicht. Allerdings hat dieses herkömmliche Verfahren den Nachteil, dass je größer die Drehzahl bei der Bearbeitung ist, desto stärker die Anfangsspannkraft erhöht sein muss. Die erhöhte Anfangsspannkraft liegt sowohl am Anfang des Spannvorganges vor dem Rauffahren der Drehzahl als auch am Ende des Spannvorganges nach dem Runterfahren der Drehzahl an den Werkstücken an. Somit hat dieses Verfahren den Nachteil, dass Werkstücke aus deformationsempfindlichen Materialien durch die erhöhte Anfangsspannkraft am Anfang des Spannvorganges und / oder am Ende des Spannvorganges beschädigt werden.

Ein weiteres herkömmliches Verfahren zur Sicherstellung einer ausreichenden Spannkraft bei höheren Drehzahlen verwendet einen mechanischen Fliehkraftausgleich. Auf diese Weise wird der Nachteil einer erhöhten anfänglichen Spannkraft vermieden. Allerdings weist dieses Verfahren den Nachteil einer sogenannten Spannkrafthysterese auf. Die Spannkrafthysterese führt beim Abbremsen aus hoher Drehzahl zu einer deutlich höheren Spannkraft als zu Beginn des Spannvorganges. Somit weisen das Verfahren mit den mechanischen Fliehkraftausgleich und die Werkzeugmaschine mit den mechanischen Fliehkraftausgleich den Nachteil auf, dass Werkstücke aus deformationsempfindlichen Materialien am Ende des Spannvorganges beschädigt werden.

Der Erfindung liegt daher die Aufgabe zugrunde, sowohl ein Verfahren zum Ausgleich der Fliehkraft bei einem Betrieb einer Werkzeugmaschine mit hohen Drehzahlen als auch ein Bestimmungsverfahren einer Korrelationstabelle für das Verfahren zum Ausgleich der Fliehkraft als auch eine Werkzeugmaschine mit einer Ausgleichsvorrichtung gegen die Fliehkraft bei hohen Drehzahlen bereit zu stellen, die die oben genannten Nachteile überwinden.

Diese Aufgabe wird bei einer Werkzeugmaschine der eingangs genannten Art durch eine Steuerung zum Aufbau einer Druckdifferenz zwischen einem Arbeitsdruck und einem Gegendruck in Abhängigkeit der momentan gegebenen Drehzahl des Spannfutters gelöst.

Die Werkzeugmaschine nach der vorliegenden Erfindung weist ein Spannfutter auf, dessen Spannbacken mittels eines Spannzylinders verstellbar sind. Der Spannzylinder weist einen Zylinderkolben auf, der in einer Zylinderkammer angeordnet ist. Zwei Druckmittelleitungen sind beidseits des Zylinderkolbens für eine Druckmittelzufuhr in den Zylinderkolben angeordnet. Erfindungsgemäß weist die Werkzeugmaschine eine Steuerung zum Aufbau einer Druckdifferenz zwischen einem Arbeitsdruck und einem Gegendruck in Abhängigkeit der momentan gegebenen Drehzahl des Spannfutters auf. Dies hat den Vorteil, dass eine vorgegebene Spannkraft mit nur geringfügigen Abweichungen über einen großen Drehzahlbereich aufrecht erhalten wird.

Insbesondere für deformationsempfindliche Werkstücke, wie zum Beispiel Lagerringe oder andere dünnwandige Werkstücke, die ein deformationsarmes Spannen erfordern, ist dies für eine schnellere Bearbeitung besonders vorteilhaft.

Somit kann der Gegendruck, der herkömmlich nur zum Lösen der Werkstücke aus dem Spannfutter verwendet wird, auch bei der Bearbeitung der Werkstücke variiert werden, um das Absinken der Spannkraft auf die Werkstücke bei Erhöhung der Drehzahl auszugleichen. Alternativ und / oder zusätzlich kann der Arbeitsdruck variiert werden, um das Absinken der Spannkraft auf die Werkstücke bei Erhöhung der Drehzahl auszugleichen.

Bei einem bevorzugten Ausführungsbeispiel ist bei der Werkzeugmaschine in einer der Druckmittelleitungen ein Druckminderer angeordnet. Dies hat den Vorteil, dass auf einfache Weise der Druck variiert wird. Weiterhin kann in beiden Druckmittelleitungen ein Druckminderer angeordnet sein. Somit wird auf einfache Weise für die Einstellung der Druckdifferenz sowohl eine Änderung des Gegendruckes als auch eine Änderung des Arbeitsdruckes verwendet.

Vorteilhafterweise ist bei der Werkzeugmaschine mindestens ein Sensor in einer Spannbacke angeordnet, wobei der Sensor zur Messung der effektiven fliehkraftabhängigen Spannkraft ausgestaltet ist. Dies hat den Vorteil, dass die Veränderungen der effektiven fliehkraftabhängigen Spannkraft in Abhängigkeit von der Drehzahl während der Bearbeitung gemessen und gegebenenfalls korrigiert werden können.

Das Verfahren nach der vorliegenden Erfindung für den Betrieb einer Werkzeugmaschine der eingangs genannten Art, wobei die Spannbacken der Werkzeugmaschine mittels eines Spannzylinders verstellbar sind und der Spannzylinder einen Zylinderkolben aufweist und der Zylinderkolben in einer Zylinderkammer angeordnet ist und in die Zylinderkammer beidseits des Zylinderkolbens Druckmittelleitungen münden, weist einen Verfahrensschritt des Aufbauens eines Arbeitsdruckes auf der in Spannrichtung wirkenden Seite des Zylinderkolbens, einen Verfahrensschritt des Aufbauens eines Gegendruckes auf der gegenüberliegenden Seite des Zylinderkolbens und einen Verfahrensschritt des Steuerns einer Druckdifferenz zwischen dem Arbeitsdruck und dem Gegendruck in Abhängigkeit der momentan gegebenen Drehzahl des Spannfutters auf. Dieses Verfahren für den Betrieb der Werkzeugmaschine hat den Vorteil, dass eine vorgegebene Spannkraft auf die Werkstücke mit nur geringfügigen Abweichungen über einen großen Drehzahlbereich aufrecht erhalten wird.

Der Verfahrensschritt des Steuerns der Druckdifferenz zwischen dem Arbeitsdruck und dem Gegendruck in Abhängigkeit der momentan gegebenen Drehzahl des Spannfutters kann einen Verfahrensschritt des Veränderns des Gegendruckes in Abhängigkeit der momentan gegebenen Drehzahl des Spannfutters und / oder einen Verfahrensschritt des Veränderns des Arbeitsdruckes in Abhängigkeit der momentan gegebenen Drehzahl des Spannfutters umfassen. Somit kann die vorgegebene Spannkraft auf die Werkstücke über einen großen Drehzahlbereich sicher aufrecht erhalten werden.

Bevorzugt weisen der Verfahrensschritt des Veränderns des Gegendruckes in der Zylinderkammer mit der Drehzahl des Spannfutters und / oder der Verfahrensschritt des Veränderns des Arbeitsdruckes mit der Drehzahl des Spannfutters auf: einen Verfahrensschritt des Auslesens aus einer Korrelationstabelle von mindestens einem Korrelationswert des Gegendruckes für die vorgegebene Drehzahl des Spannfutters und einen Verfahrensschritt des Zuführens des mindestens einen Korrelationswertes des Gegendruckes an eine Gegendruckeinstellvorrichtung für das Spannfutter bzw. einen Verfahrensschritt des Auslesens aus einer Korrelationstabelle von mindestens einem Korrelationswert des Arbeitsdruckes für die vorgegebene Drehzahl des Spannfutters und einen Verfahrensschritt des Zuführens des mindestens einen Korrelationswertes des Arbeitsdruckes an eine Arbeitsdruckeinstellvorrichtung für das Spannfutter. Die Verwendung einer Korrelationstabelle hat den Vorteil, dass auf einfache und schnelle Weise der erforderliche Gegendruck bzw. der erforderliche Arbeitsdruck für die jeweilige Drehzahl bestimmt ist. Die Korrelationstabelle kann für jede Werkzeugmaschine jeweils einzeln bestimmt werden oder für alle Werkzeugmaschinen einer gleichen Modellreihe nur einmal bestimmt werden.

Vorteilhafterweise enthält die Korrelationstabelle mindestens eine erste Untertabelle für ein Hochfahren der Drehzahl des Spannfutters und mindestens eine zweite Untertabelle für ein Runterfahren der Drehzahl des Spannfutters. Somit werden die Einflüsse der Reibung berücksichtigt, die einen unterschiedlichen Einfluss der Fliehkraft beim Rauffahren und beim Runterfahren der Drehzahl bewirken.

Bevorzugt werden die erste Untertabelle und die zweite Untertabelle in Abhängigkeit von dem Spanndurchmesser und / oder dem zu bearbeitenden Material ausgewählt. Dies hat den Vorteil, dass in Abhängigkeit des Spanndurchmessers und / oder des zu bearbeitenden Materials das Verfahren hinsichtlich der erforderlichen Konstanz der effektiven fliehkraftabhängigen Spannkraft und einer beschleunigten Bearbeitung optimiert wird.

Besonders schnell ist das Verfahren für den Betrieb der Werkzeugmaschine durchführbar, wenn die Korrelationstabelle Korrelationswerte des Gegendruckes bzw. des Arbeitsdruckes in dem Spannzylinder für einen Abstand der Drehzahlen von 500 Umdrehungen/Minute (rpm) für einen Bereich der Drehzahlen von 0 bis 10.000 rpm aufweist. Hinsichtlich der Konstanz der effektiven fliehkraftabhängigen Spannkraft ist es für das Verfahren für den Betrieb der Werkzeugmaschine vorteilhaft, wenn für die Korrelationswerte der Abstand der Drehzahlen 100 rpm, vorzugsweise 20 rpm und insbesondere 10 rpm, und der Bereich der Drehzahl 0 bis 8.000 rpm, vorzugsweise 0 bis 5000 rpm und insbesondere 0 bis 3600 rpm, beträgt.

Ein bevorzugtes Ausführungsbeispiel des Verfahrens für den Betrieb der Werkzeugmaschine weist einen Verfahrensschritt des Erfassens einer effektiven fliehkraftabhängigen Spannkraft mittels mindestens eines einer Spannbacke zugeordneten Sensors und einen Verfahrensschritt des Regelns des Gegendruckes bzw. des Arbeitsdruckes in Abhängigkeit von den Sensordaten auf. Somit werden die Veränderungen der effektiven fliehkraftabhängigen Spannkraft in Abhängigkeit von der Drehzahl während der Bearbeitung gemessen und gegebenenfalls korrigiert. Wenn zusätzlich auf eine Korrelationstabelle zurückgegriffen werden kann, hat dies den Vorteil, dass das Verfahren trotz eines möglichen Ausfalls des Sensors weiterbetrieben werden kann.

Weiterhin kann bei dem Verfahren für den Betrieb der Werkzeugmaschine der Anfangswert der Spannkraft auf die um das Regelungsintervall erhöhte erforderliche Spannkraft eingestellt werden.

Bei einem erfindungsgemäßen Bestimmungsverfahren einer Korrelationstabelle für das oben genannte Verfahren für den Betrieb der Werkzeugmaschine wird für mindestens eine Drehzahl des Spannfutters ein Korrelationswert eines Gegendruckes in dem Spannzylinder bzw. ein Korrelationswert eines Arbeitsdruckes in dem Spannzylinder derart bestimmt, dass der Einfluss der Fliehkraft auf die Spannkraft für diese Drehzahl verringert wird. Somit wird die effektive fliehkraftabhängige Spannkraft über einen größeren Bereich der Drehzahl innerhalb der geforderten Konstanz gehalten.

Bevorzugt wird bei dem Bestimmungsverfahren für die Korrelationstabelle mindestens eine erste Untertabelle für ein Hochfahren der Drehzahl des Spannfutters und mindestens eine zweite Untertabelle für ein Runterfahren der Drehzahl des Spannfutters bestimmt. Somit können die beim Rauffahren und beim Runterfahren der Drehzahl unterschiedlichen Einflüsse der Reibung auf die effektive fliehkraftabhängige Spannkraft berücksichtigt werden.

Bei einem Ausführungsbeispiel des Bestimmungsverfahrens werden die Korrelationswerte für einen Abstand der Drehzahlen von 500 rpm, vorzugsweise von 100 rpm und besonders von 20 rpm und insbesondere von 10 rpm, und einen Bereich der Drehzahlen von 0 bis 10000 rpm, vorzugsweise von 0 bis 8.000 rpm und besonders von 0 bis 5000 rpm und insbesondere von 0 bis 3600 rpm, bestimmt.

Ein weiterer Gesichtspunkt der vorliegenden Erfindung betrifft ein Speichermedium mit einer Korrelationstabelle, die nach einem der oben gennannten Bestimmungsverfahren bestimmt wurde. Dies hat den Vorteil, dass zum Beispiel eine neue Korrelationstabelle, die auf andere Materialien der Werkstücke oder eine andere Bearbeitungsweise angepasst ist, einfach auf erfindungsgemäße Werkzeugmaschinen übertragen werden kann.

Ein zusätzlicher Gesichtspunkt der vorliegenden Erfindung betrifft ein Speichermedium mit einem Computerprogramm zur Durchführung eines der oben genannten Verfahren für den Betrieb einer Werkzeugmaschine. Somit können zum Einen erfindungsgemäße Werkzeugmaschinen verbessert werden und zum Anderen können auch herkömmliche Werkzeugmaschinen erfindungsgemäß umgerüstet werden.

Weiterhin betrifft die vorliegende Erfindung auch die Umrüstung herkömmlicher Werkzeugmaschinen. Es ist besonders vorteilhaft, dass durch eine Steuerung des Arbeitsdruckes und des Gegendruckes ein Fliehkraftausgleich erreicht werden kann.

Ein anderer Gesichtspunkt der vorliegenden Erfindung betrifft ein Speichermedium mit einem Computerprogramm zur Durchführung eines der oben genannten Bestimmungsverfahren der Korrelationstabelle. Dies hat den Vorteil, dass auf einfache Weise das Bestimmungsverfahren auf verschiedenen Werkzeugmaschinen eingesetzt werden kann.

Im Folgenden wird die Erfindung an einem in der Zeichnung dargestellten Ausführungsbeispiel näher erläutert; es zeigen:
- Fig. 1: eine Gesamtdarstellung einer Werkzeugmaschine nach einem Ausführungsbeispiel der vorliegenden Erfindung in einer Seitenansicht,
- Fig. 2: eine Frontansicht des Spannfutters einer Werkzeugmaschine,

- Fig. 3: eine Seitenansicht des Spannfutters einer Werkzeugmaschine,
- Fig. 4: eine Darstellung des Spannzylinders einer Werkzeugmaschine,
- Fig. 5: eine Darstellung der Abhängigkeit der effektiven Spannkraft von der Drehzahl bei einer herkömmlichen Werkzeugmaschine, und
- Fig. 6: eine Darstellung der Abhängigkeit der effektiven Spannkraft von der Drehzahl bei einer Werkzeugmaschine nach einem Ausführungsbeispiel der vorliegenden Erfindung.

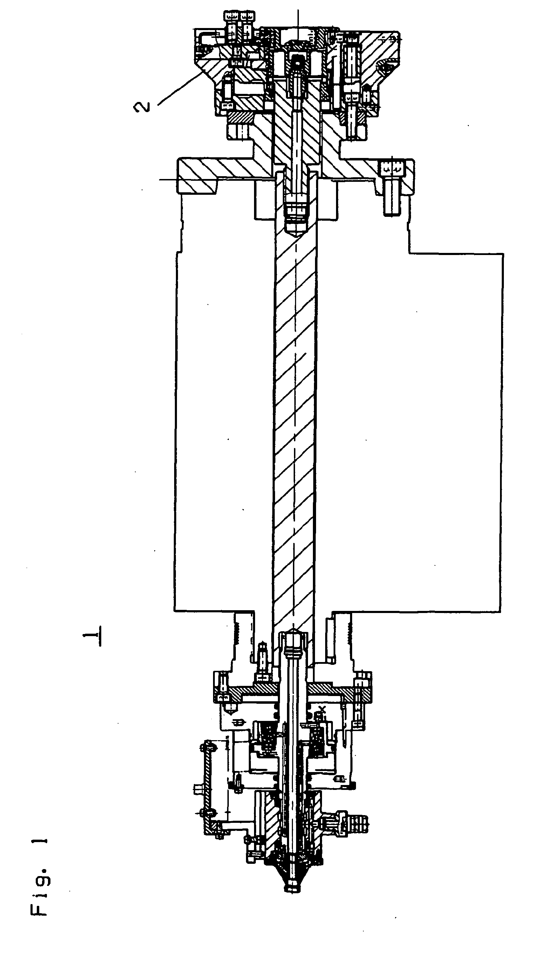

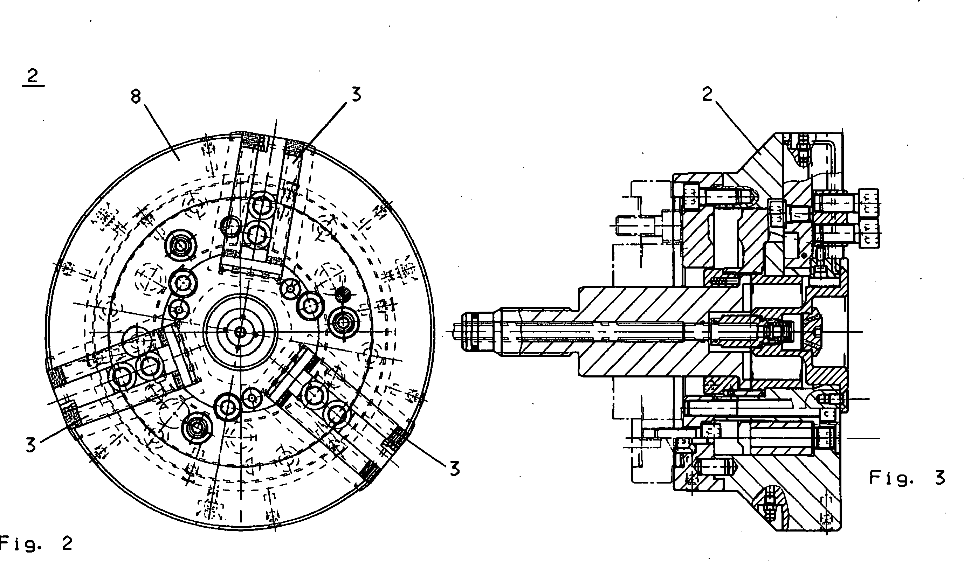

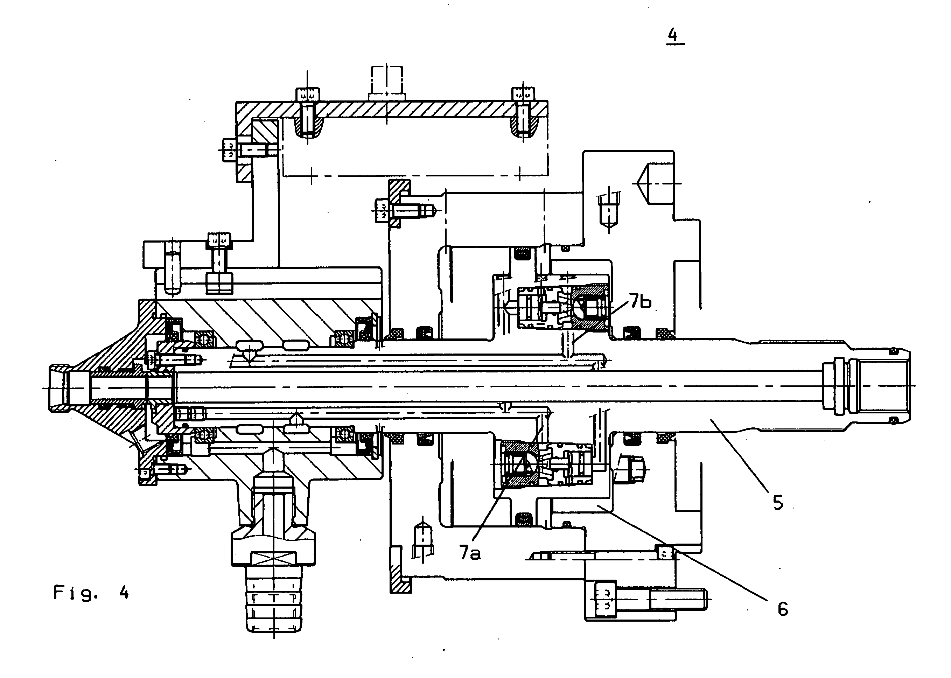

Fig. 1 zeigt in einer Seitenansicht eine Gesamtdarstellung einer Werkzeugmaschine nach einem Ausführungsbeispiel der vorliegenden Erfindung. Die Werkzeugmaschine 1 enthält ein Spannfutter 2, das in einer Frontansicht in Fig. 2 mit Spannbacken 3 und einem Futterkörper 8 gezeigt ist. In Seitenansicht ist das Spannfutter 2 in Fig. 3 zu sehen. Die Spannbacken 3 des Spannfutters 2 sind mittels eines Spannzylinders 4 verstellbar. Eine vergrößerte Darstellung des Spannzylinders 4 ist in Fig. 4 in Seitenansicht zu sehen. Der Spannzylinders 4 weist einen Zylinderkolben 5 auf. Der Zylinderkolben 5 ist in einer Zylinderkammer 6 angeordnet, wobei zwei Druckmittelleitungen 7a, 7b beidseits des Zylinderkolbens 5 zur Druckmittelzufuhr in den Zylinderkolben 6 angeordnet sind. Weiterhin weist die Werkzeugmaschine 1 eine nicht dargestellte Steuerung zum Aufbau einer Druckdifferenz zwischen einem Arbeitsdruck und einem Gegendruck in Abhängigkeit der momentan gegebenen Drehzahl des Spannfutters 2 auf.

Die Werkzeugmaschine 1 kann in einer der Druckmittelleitungen 7a, 7b einen Druckminderer aufweisen. Die Werkzeugmaschine 1 kann auch in beiden Druckmittelleitungen 7a, 7b einen Druckminderer aufweisen.

Bevorzugt enthält die Werkzeugmaschine mindestens einen nicht dargestellten Sensor, der in mindestens einer Spannbacke 3 angeordnet ist. Der nicht dargestellte Sensor ist zur Messung der effektiven fliehkraftabhängigen Spannkraft ausgestaltet.

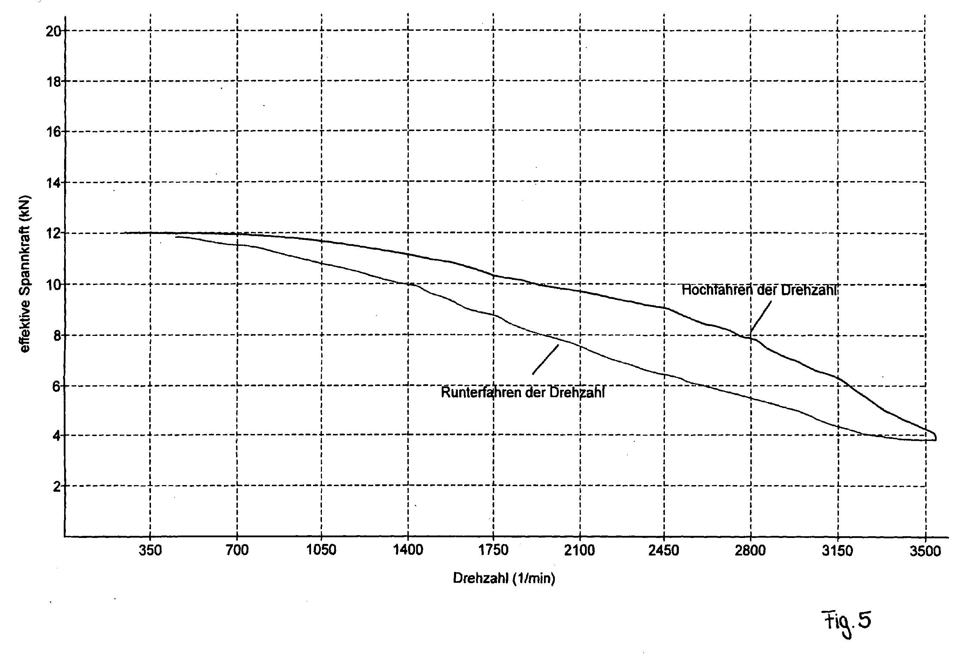

Fig. 5 zeigt eine Darstellung der Abhängigkeit der effektiven fliehkraftabhängigen Spannkraft von der Drehzahl des Spannfutters 2 bei einer herkömmlichen Werkzeugmaschine ohne Fliehkraftausgleich. Die Anfangsspannkraft von 12,1 kN fällt mit steigender Drehzahl des Spannfutters aufgrund der Fliehkraft bis auf 3,7 kN bei 3500 Umdrehungen/Minute (rpm). Demzufolge ist eine sichere Bearbeitung der Werkstücke bei höheren Drehzahlen des Spannfutters 2 nicht mehr sichergestellt. Allerdings kann die Anfangsspannkraft nicht so weit erhöht werden, dass eine bei den für eine schnellere Bearbeitung gewünschten höheren Drehzahlen des Spannfutters 2 noch ausreichende effektive fliehkraftabhängige Spannkraft sichergestellt wird, weil in diesem Fall die effektive fliehkraftabhängige Spannkraft bei niedrigen Drehzahlen so groß würde, dass deformationsempfindliche Werkstücke zerstört werden könnten.

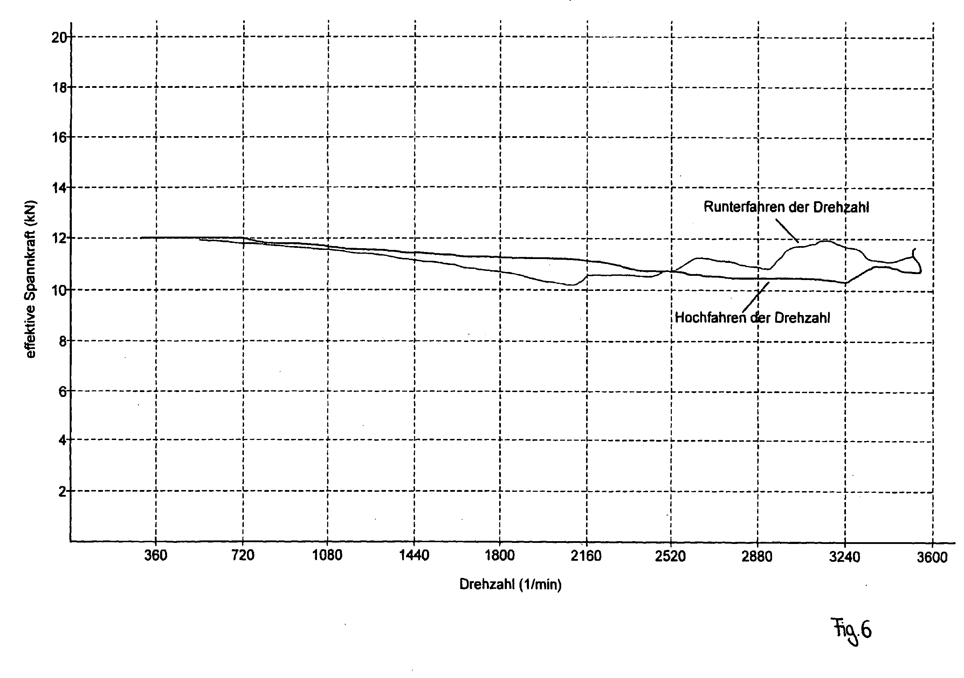

Fig. 6 zeigt eine Darstellung der Abhängigkeit der effektiven fliehkraftabhängigen Spannkraft von der Drehzahl des Spannfutters 2 bei einer Werkzeugmaschine 1 mit Fliehkraftausgleich nach einem Ausführungsbeispiel der vorliegenden Erfindung. Die Anfangsspannkraft von 12,0 kN schwankt mit steigender Drehzahl des Spannfutters 2 in einem Bereich der effektiven fliehkraftabhängigen Spannkraft von 10,1 kN bis 12,0 kN, so dass selbst bei einer Drehzahl des Spannfutters 2 von 3500 Umdrehungen/Minute (rpm) eine sichere Einspannung der Werkstücke sichergestellt ist.

Das Verfahren für den Betrieb einer Werkzeugmaschine 1 nach einem Ausführungsbeispiel der vorliegenden Erfindung umfasst einen Verfahrensschritt des Aufbauens eines Arbeitsdruckes auf der in Spannrichtung wirkenden Seite des Zylinderkolbens 5, einen Verfahrensschritt des Aufbauens eines Gegendruckes auf der gegenüberliegenden Seite des Zylinderkolbens 5 und einen Verfahrensschritt des Steuerns einer Druckdifferenz zwischen dem Arbeitsdruck und dem Gegendruck in Abhängigkeit der momentan gegebenen Drehzahl des Spannfutters 2. Der Verfahrensschritt des Steuerns einer Druckdifferenz zwischen dem Arbeitsdruck und dem Gegendruck kann einen Verfahrensschritt des Veränderns des Gegendruckes in Abhängigkeit der momentan gegebenen Drehzahl des Spannfutters 2 und / oder einen Verfahrensschritt des Veränderns des Arbeitsdruckes in Abhängigkeit der momentan gegebenen Drehzahl des Spannfutters 2 aufweisen.

Der Verfahrensschritt des Veränderns des Gegendruckes in der Zylinderkammer 6 mit der Drehzahl des Spannfutters 2 kann einen Verfahrensschritt des Auslesens aus einer Korrelationstabelle von mindestens einem Korrelationswert des Gegendruckes für die vorgegebene Drehzahl des Spannfutters 2 und einen Verfahrensschritt des Zuführens des mindestens einen Korrelationswertes des Gegendruckes an eine Gegendruckeinstellvorrichtung für das Spannfutter 2 aufweisen.

Weiterhin kann der Verfahrensschritt des Veränderns des Arbeitsdruckes in der Zylinderkammer 6 mit der Drehzahl des Spannfutters 2 einen Verfahrensschritt des Auslesens aus einer Korrelationstabelle von mindestens einem Korrelationswert des Arbeitsdruckes für die vorgegebene Drehzahl des Spannfutters 2 und einen Verfahrensschritt des Zuführens des mindestens einen Korrelationswertes des Arbeitsdruckes an eine Arbeitsdruckeinstellvorrichtung für das Spannfutter 2 aufweisen

Bevorzugt weist die Korrelationstabelle mindestens eine erste Untertabelle für ein Hochfahren der Drehzahl des Spannfutters 2 und mindestens eine zweite Untertabelle für ein Runterfahren der Drehzahl des Spannfutters 2 auf. Die erste Untertabelle und die zweite Untertabelle können in Abhängigkeit von dem Spanndurchmesser und/oder dem zu bearbeitenden Material ausgewählt werden.

Bei der Korrelationstabelle können die Korrelationswerte des Gegendruckes bzw. des Arbeitsdruckes in dem Spannzylinder 4 für einen Abstand der Drehzahlen von 500 rpm für einen Bereich der Drehzahlen von 0 bis 10.000 rpm bestimmt sein. Weiterhin können bei dem Verfahren für den Betrieb einer Werkzeugmaschine 1 die Korrelationswerte für einen Abstand der Drehzahlen von 100 rpm, vorzugsweise 20 von rpm und insbesondere von 10 rpm, und für einen Bereich der Drehzahlen von 0 bis 8.000 rpm, vorzugsweise von 0 bis 5000 rpm und insbesondere von 0 bis 3600 rpm, bestimmt sein.

Vorteilhafterweise umfasst das Verfahren für den Betrieb einer Werkzeugmaschine 1 einen Verfahrensschritt des Erfassens einer effektiven fliehkraftabhängigen Spannkraft mittels mindestens eines einer Spannbacke 3 zugeordneten, nicht dargestellten Sensors und einen Verfahrensschritt des Regelns des Gegendruckes in Abhängigkeit von den Sensordaten bzw. einen Verfahrensschritt des Regelns des Arbeitsdruckes in Abhängigkeit von den Sensordaten.

Bevorzugt wird bei dem Verfahren für den Betrieb einer Werkzeugmaschine 1 der Anfangswert der Spannkraft auf die um das Regelungsintervall erhöhte erforderliche Spannkraft eingestellt.

Nach einem weiteren Gesichtspunkt der vorliegenenden Erfindung weist ein Speichermedium ein Computerprogramm zur Durchführung eines der oben genannten Verfahren für den Betrieb einer Werkzeugmaschine 1 auf.

Bei einem Bestimmungsverfahren einer Korrelationstabelle für einen Fliehkraftausgleich bei einer Werkzeugmaschine nach einem Ausführungsbeispiel der vorliegenden Erfindung wird ein Korrelationswert eines Gegendruckes in dem Spannzylinder 4 bzw. eines Arbeitsdruckes derart bestimmt, dass der Einfluss der Fliehkraft auf die Spannkraft für diese Drehzahl verringert wird.

Bei einem bevorzugten Ausführungsbeispiel weist die Korrelationstabelle mindestens eine erste Untertabelle für ein Hochfahren der Drehzahl des Spannfutters 2 und mindestens eine zweite Untertabelle für ein Runterfahren der Drehzahl des Spannfutters 2 auf. Weiterhin können bei dem Bestimmungsverfahren die Korrelationswerte für einen Abstand der Drehzahlen von 500 rpm, vorzugsweise von 100 rpm und besonders von 20 rpm und insbesondere von 10 rpm, und einen Bereich der Drehzahlen von 0 bis 10000 rpm, vorzugsweise von 0 bis 8.000 rpm und besonders von 0 bis 5000 rpm und insbesondere von 0 bis 3600 rpm, bestimmt werden.

Nach einem anderen Gesichtspunkt der vorliegenden Erfindung weist ein Speichermedium ein Computerprogramm zur Durchführung eines der oben genannten Bestimmungsverfahren der Korrelationstabelle auf. Weiterhin weist nach einem anderen Gesichtspunkt der vorliegenenden Erfindung ein Speichermedium eine der Korrelationstabellen auf, die nach einem der oben genannten Bestimmungsverfahren bestimmt wurden.

Die vorliegende Erfindung betrifft auch die Umrüstung einer herkömmlichen Werkzeugmaschine auf eine erfindungsgemäße Werkzeugmaschine 1 mit einer entsprechenden Steuerung, die den Aufbau einer Druckdifferenz zwischen einem Arbeitsdruck und einem Gegendruck in Abhängigkeit der momentan gegebenen Drehzahl des Spannfutters 2 ermöglicht.

## Patentansprüche

1. Verfahren für den Betrieb einer Werkzeugmaschine (1) mit einem Spannfutter (2), dessen Spannbacken (3) mittels eines Spannzylinders (4) verstellbar sind, der einen Zylinderkolben (5) aufweist, der in einer Zylinderkammer (6) angeordnet ist, in die beidseits des Zylinderkolbens (5) Druckmittelleitungen (7a, 7b) münden, umfassend einen Verfahrensschritt des Aufbauens eines Arbeitsdruckes auf der in Spannrichtung wirkenden Seite des Zylinderkolbens (5) und einen Verfahrensschritt des Aufbauens eines Gegendruckes auf der gegenüberliegenden Seite des Zylinderkolbens (5), **gekennzeichnet durch** einen Verfahrensschritt des Steuerns einer Druckdifferenz zwischen dem Arbeitsdruck und dem Gegendruck in Abhängigkeit der momentan gegebenen Drehzahl des Spannfutters (2).

2. Verfahren nach Anspruch 1, **dadurch gekennzeichnet, dass** der Verfahrensschritt des Steuerns der Druckdifferenz zwischen dem Arbeitsdruck und dem Gegendruck einen Verfahrensschritt des Veränderns des Gegendruckes in Abhängigkeit der momentan gegebenen Drehzahl des Spannfutters (2) aufweist.

3. Verfahren nach Anspruch 2, **dadurch gekennzeichnet, dass** der Schritt des Veränderns des Gegendruckes in der Zylinderkammer (6) mit der Drehzahl des Spannfutters (2) einen Verfahrensschritt des Auslesens aus einer Korrelationstabelle von mindestens einem Korrelationswert des Gegendruckes für die vorgegebene Drehzahl des Spannfutters (2) und einen Verfahrensschritt des Zuführens des mindestens einen Korrelationswertes des Gegendruckes an eine Gegendruckeinstellvorrichtung für das Spannfutter (2) aufweist.

4. Verfahren nach Anspruch 1, **dadurch gekennzeichnet, dass** der Verfahrensschritt des Steuerns der Druckdifferenz zwischen dem Arbeitsdruck und dem Gegendruck einen Verfahrensschritt des Veränderns des Arbeitsdruckes in Abhängigkeit der momentan gegebenen Drehzahl des Spannfutters (2).

5. Verfahren nach Anspruch 4, **dadurch gekennzeichnet, dass** der Schritt des Veränderns des Arbeitsdruckes in der Zylinderkammer (6) mit der Drehzahl des Spannfutters (2) einen Verfahrensschritt des Auslesens aus einer Korrelationstabelle von mindestens einem Korrelationswert des Arbeitsdruckes für die vorgegebene Drehzahl des Spannfutters (2) und einen Verfahrensschritt des Zuführens des mindestens einen Korrelationswertes des Arbeitsdruckes an eine Arbeitsdruckeinstellvorrichtung für das Spannfutter (2) aufweist.

6. Verfahren nach Anspruch 3 oder 5, **dadurch gekennzeichnet, dass** die Korrelationstabelle mindestens eine erste Untertabelle für ein Hochfahren der Drehzahl des Spannfutters (2) und mindestens eine zweite Untertabelle für ein Runterfahren der Drehzahl des Spannfutters (2) aufweist.

7. Verfahren nach Anspruch 6, **gekennzeichnet dadurch, dass** die erste Untertabelle und die zweite Untertabelle in Abhängigkeit von dem Spanndurchmesser und/oder dem zu bearbeitenden Material ausgewählt werden.

8. Verfahren nach einem der Ansprüche 3 und 5 bis 7, **dadurch gekennzeichnet, dass** die Korrelationstabelle Korrelationswerte des Gegendruckes in dem Spannzylinder (4) bzw. des Arbeitsdruckes für einen Abstand der Drehzahlen von 500 rpm für einen Bereich der Drehzahlen von 0 bis 10.000 rpm aufweist.

9. Verfahren nach Anspruch 8, **dadurch gekennzeichnet, dass** für die Korrelationswerte der Abstand der Drehzahlen 100 rpm, vorzugsweise 20 rpm und insbesondere 10 rpm, und der Bereich der Drehzahlen 0 bis 8.000 rpm, vorzugsweise 0 bis 5000 rpm und insbesondere 0 bis 3600 rpm, beträgt.

10. Verfahren nach einem der Ansprüche 2 bis 9, **gekennzeichnet durch** einen Verfahrensschritt des Erfassens einer effektiven fliehkraftabhängigen Spannkraft mittels mindestens eines einer Spannbacke (3) zugeordneten Sensors und einen Verfahrensschritt des Regelns des Gegendruckes in Abhängigkeit von den Sensordaten bzw. einen Verfahrensschritt des Regelns des Arbeitsdruckes in Abhängigkeit von den Sensordaten.

11. Verfahren nach einem der vorhergehenden Ansprüche, **dadurch gekennzeichnet, dass** der Anfangswert der Spannkraft auf die um das Regelungsintervall erhöhte erforderliche Spannkraft eingestellt wird.

12. Bestimmungsverfahren einer Korrelationstabelle für einen Fliehkraftausgleich bei einem Spannfutter (2) mit einem Spanndruck in einem Spannzylinder (4), **dadurch gekennzeichnet, dass** für mindestens eine Drehzahl des Spannfutters (2) ein Korrelationswert eines Gegendruckes und oder eines Arbeitsdruckes in dem Spannzylinder (4) derart bestimmt wird, dass der Einfluss der Fliehkraft auf die Spannkraft für diese Drehzahl verringert wird.

13. Bestimmungsverfahren nach Anspruch 12, **dadurch gekennzeichnet, dass** die Korrelationswerte des Gegendruckes bzw. des Arbeitsdruckes in Form einer Korrelationstabelle bestimmt werden, die mindestens eine erste Untertabelle für ein Hochfahren der Drehzahl des Spannfutters (2) und mindestens eine zweite Untertabelle für ein Runterfahren der Drehzahl des Spannfutters (2) aufweist.

14. Bestimmungsverfahren nach Anspruch 12 oder 13, **dadurch gekennzeichnet, dass** die Korrelationswerte für einen Abstand der Drehzahlen von 500 rpm, vorzugsweise von 100 rpm und besonders von 20 rpm und insbesondere von 10 rpm, und für einen Bereich der Drehzahlen von 0 bis 10000 rpm, vorzugsweise von 0 bis 8.000 rpm und besonders von 0 bis 5000 rpm und insbesondere von 0 bis 3600 rpm, bestimmt werden.

15. Speichermedium mit einer Korrelationstabelle, die nach einem Bestimmungsverfahren der Ansprüche 12 bis 14 bestimmt wurde.

16. Speichermedium mit einem Computerprogramm zur Durchführung eines Verfahrens für den Betrieb einer Werkzeugmaschine (1) nach einem der Ansprüche 1 bis 11.

17. Speichermedium mit einem Computerprogramm zur Durchführung eines Bestimmungsverfahrens der Korrelationstabelle nach einem der Ansprüche 12 bis 14.

18. Werkzeugmaschine (1) mit einem Spannfutter (2), dessen Spannbacken (3) mittels eines Spannzylinders (4) verstellbar sind, der einen Zylinderkolben (5) aufweist, der in einer Zylinderkammer (6) angeordnet ist, wobei zwei Druckmittelleitungen (7a, 7b) beidseits des Zylinderkolbens (5) zur Druckmittelzufuhr in den Zylinderkolben (6) angeordnet sind und die Werkzeugmaschine (1) eine Steuerung zum Aufbau einer Druckdifferenz zwischen einem Arbeitsdruck und einem Gegendruck in Abhängigkeit der momentan gegebenen Drehzahl des Spannfutters (2) aufweist.

19. Werkzeugmaschine (1) nach Anspruch 18, **dadurch gekennzeichnet, dass** in einer der Druckmittelleitungen (7a, 7b) ein Druckminderer angeordnet ist.

20. Werkzeugmaschine (1) nach Anspruch 19, **dadurch gekennzeichnet, dass** in beiden Druckmittelleitungen (7a, 7b) ein Druckminderer angeordnet ist.

21. Werkzeugmaschine (1) nach einem der Ansprüche 18 bis 20, **gekennzeichnet durch** mindestens einen Sensor, der in mindestens einer Spannbacke (3) angeordnet ist und der zur Messung der effektiven fliehkraftabhängigen Spannkraft ausgestaltet ist.
